# EUROPEAN PATENT APPLICATION

(11) **EP 0 973 130 A2**
(43) Date of publication of application: **19.01.2000**
(21) Application number: 99305551.6
(22) Date of filing: 13.07.1999
(51) Int. Cl.: G06T 11/00

(54) **An image processing method and an apparatus therefor**

(30) Priority: 13.07.1998 JP 21487898
(71) Applicant: SHIMA SEIKI MANUFACTURING LIMITED, Wakayama, Wakayama (JP)
(72) Inventor: Nagashima, Hiroshi, Wakayama (JP)
(74) Representative: Jackson, Robert Patrick

(57) **Abstract**

The drawing direction at the time of an increase in the drawing pressure is stored as the direction of a pen touch vector, and an increment in the drawing pressure per unit length of drawing is stored as the magnitude of the pen touch vector. A shape of the pen is defined by the direction of the pen touch vector as a pointed form according to the magnitude of the pen touch vector. When the drawing pressure is constant, this shape is used to draw.

## Description

The present invention relates to an image processor, and in particular, to more realistic drawing input.

In image processing, a pen such as a stylus is used to simulate real drawing tools, for example, brushes such as writing brushes and paintbrushes, crayons, chalks and air sprayers. In drawing input, shapes corresponding to a drawing tool which a pen is assumed to simulate are defined. A shape, for example, may be circular and may have a higher density in its center. Shapes are not limited to circles. Other forms, for example, a square, may be used. A shape may be provided with a plurality of peaks. The configuration and/or density of a shape may be altered according to a pressure that is exerted to a pen (drawing pressure). For example, it has been practiced to increase a radius or a density of a shape according to a drawing pressure. When coordinates of a pen and a drawing pressure are inputted, for example, an image that has been inputted and a corresponding shape are blended to form a new image.

Here, a drawing tool is a brush, such as a paintbrush or a writing brush. Such brushes have a brush tip, and the direction of the brush tip is not necessarily parallel to the moving direction of the brush. Drawing is normally done with a form that is not circular except when the brush tip is vertical. It is hard, however, for the existing image processing methods to simulate this. Even when a paintbrush or a writing brush is simulated, the configuration of a shape is mostly circular, and the direction of the brush tip in relation to the brush stem can not be taken into consideration. When a real brush is moved after it has been made to touch a canvas, etc., the width of a line will differ depending on whether the brush tip has the same direction with the moving direction of the brush or not. This, however, can not be simulated if the drawing pressure alone is taken into consideration.

Viewed from one aspect, the present invention is characterized by generating and storing a shape having a pointed root end and a top end thicker than the root end, having a direction determined by the moving direction of said drawing input, and having a degree of thickening from the root end to the top end determined by increase in said drawing pressure, based upon said increase in said drawing pressure, and drawing with usage of the stored shape.

Preferably, said shape is stored, by generating and storing a pen touch vector, having a direction determined by the moving direction of the drawing input and having a magnitude determined by the increase in the drawing pressure.

Preferably, said shape is generated by modifying a stored original shape according to said pen touch vector.

Preferably, said shape is generated by enlarging the size of an original shape with the increase in the drawing pressure into a plurality of enlarged shapes and overlapping said plurality of enlarged shapes.

Preferably, drawing is performed with usage of said shape during said drawing pressure being substantially constant.

Preferably, the direction of said shape is rotated to the moving direction of the drawing input during said drawing pressure being constant.

Preferably, the direction of the stored shape is rotated by detecting rotation of said drawing input.

From another aspect, the invention is characterized by generating a pen touch vector according to both a force applied in a direction not parallel to a direction of said stem and the drawing pressure of the drawing input, generating a shape in the direction of said pen touch vector and having a pointed root end and a thick top end, and having a degree of thickening from the root end to the top end determined by the magnitude of the pen touch vector, and drawing with usage of said shape.

The present image processing apparatus of the invention comprises a movable drawing input, means for generating and storing a shape having a pointed root end and a thick top end, having a direction determined by a moving direction of said drawing input, and having a degree of thickening from the root end to the top end determined by increase in said drawing pressure, and means for drawing with usage of the stored shape.

Preferably, said image processor further comprises means for generating a pen touch vector having a direction determined by the moving direction of the drawing input, and having a magnitude determined by the increase in the drawing pressure, means for storing said pen touch vector, and means for modifying a stored original shape according to the pen touch vector for generating said shape.

Preferably, the image processor further comprises means for detecting a change in the moving direction of the drawing input and a decrease in said drawing pressure and performing brush-mark drawing upon the detection of said change in the moving direction and the decrease in said drawing pressure.

In the present invention, storing a shape means not only directly storing a shape but also storing data that can determine a shape, for example, a pen touch vector. A shape is a set of data that serves as a unit of drawing input and indicates a density distribution of drawing inputs, and usage of shape itself is widely known. Determination of the direction of a shape, etc. by the moving direction is not limited to a case wherein the direction of the shape, etc. is identical to the moving direction. Determination of the magnitude of a pen touch vector, etc. by the increment in the drawing pressure is not limited to a case wherein the increment in the drawing pressure and said magnitude are proportional to each other.

The invention may typically be implemented as follows:

The drawing pressure to the drawing input is detected, and when the drawing pressure increases, a shape is generated and stored. The root end of this shape is pointed, and the top end thereof is thicker than the root end, and the direction of the shape is determined by the moving direction of the drawing input, and the degree of thickening of the shape is determined by the increment in the drawing pressure. After that, this shape is used within, for example, one stroke to draw. The reason of specifying the time of increase in the drawing pressure is that this is the course when, for example, a touch of the pen is made and the direction of the brush tip is determined. The direction of the shape is determined by the moving direction of the drawing input at the time of increase in the drawing pressure. The shape has such a configuration that the root end is pointed and the top end is thicker than the root end. The reason of this is as follows. For example, when the brush tip is made to touch and the brush is moved from left to right, the brush tip will remain on the left side and corresponds to the root end side of the moving direction of the drawing input, and the root of the brush corresponds to the top end side. Thus the drawing result is that the brush tip side is narrow and the brush root side is thick. As a result, the present invention provides a shape that can simulate the state of contact of the brush on a canvas, etc., which is determined by the time of touching, etc. After that, if the brush is moved at a substantially constant drawing pressure, the direction of the brush tip is determined by the course when the drawing pressure increases at the time of touching, etc. After that drawing is made with the brush tip being directed in the same direction. Hence, in the present invention, the shape is stored, and on the basis of this shape, subsequent drawing is made. As a result of this, in the present invention, a shape that is remote from simple patterns such as circle can be generated, and as the direction of the shape reflects the direction of the real brush tip and as the shape is stored, actual movement of the brush can be simulated realistically.

Preferably, a pen touch vector is generated and stored as an intermediate quantity representing the shape. As is clear from this example, storing a shape does not necessarily mean storing the shape itself. As the direction of the pen touch vector is determined by the moving direction of the drawing input and the magnitude thereof is determined by the increment in the drawing pressure, the pen touch vector can be generated easily, and in turn, the shape can be generated easily.

As for generation of a shape from a pen touch vector, an original shape, for example, a circle, is modified in the direction of the pen touch vector, and an appropriate image transformation such as mesh mapping and scan address conversion is used for this modification. Thus a shape can be easily generated from a stored pen touch vector.

Generation of a shape is not limited to one using a pen touch vector. For example, the size of an original shape such as a circle is increased with increase in the drawing pressure and a plurality of such shapes are overlapped with each other. As a result, a teardrop shape, etc. can be obtained easily.

If a generated shape is stored and used in subsequent drawing, as the stored shape is used when the drawing pressure is substantially constant, even the same shape produces different line widths, etc. depending on the subsequent moving direction of the drawing input. Thus drawing under a condition that the direction of the brush tip is specified can be simulated realistically. When a real brush is moved at a substantially constant drawing pressure, the brush tip will rotate gradually and the direction of the brush tip will be paralleled to the drawing direction. Hence, preferably, the direction of the shape is rotated to the moving direction of the drawing input. The speed of rotation of the direction of the shape may be set suitably. It is sufficient that the speed can simulate the actual rotation of the brush tip.

If rotation of the drawing input itself, such as a pen, is detected, the rotation of the direction of the brush tip due to rotation of the brush can be simulated as rotation of the direction of the shape.

If forces applied in directions other than the stem direction of the drawing input and the force applied in the stem direction or drawing force are detected, these forces reflect how the user attempts to manipulate the brush tip. For example, when the user intends to draw a simple circle, dot or the like, the user will not exert uneven forces in directions other than the stem direction of the brush. In contrast to this, when the user intends to tilt the brush tip in a direction, the user will exert forces in directions other than the stem direction. Accordingly, if two forces, the force applied in the stem direction and the force applied in a direction other than the stem direction, are detected, a pen touch vector can be generated in the direction to which the user intends to manipulate the brush tip. If a shape is generated by this pen touch vector, information on generation of a shape can be obtained even in cases other than the time of increase in the drawing pressure. Thus a shape can be generated at each position.

When the brush is sprung to complete one stroke, both decrease in the drawing pressure and change in the moving direction of the drawing input occur in many cases. If this is detected and brush-mark drawing is made, brush-mark can be simulated.

Certain embodiments of the invention will now be described, by way of example only, and with reference to the accompanying drawings.

Fig. 1 is a block diagram of an image processor of an embodiment.

Fig. 2 is a flow chart that shows an algorithm for determining a pen touch vector at a time of pressure increase and generating a shape.

Fig. 3 is a diagram that shows the shape generating process of the embodiment in an aspect of modification of a circular shape.

Fig. 4 is a diagram that shows the shape generating process of the embodiment in an aspect of movement of a pen.

Fig. 5 is a flow chart that shows an algorithm of rotation of a pen touch vector in the embodiment.

Fig. 6 is a diagram that shows drawing under a condition of constant drawing pressure in the embodiment.

Fig. 7 is a characteristic diagram that shows drawing when the drawing pressure decreases and the drawing direction does not change in the embodiment.

Fig. 8 is a diagram that shows brush-mark processing in the embodiment. The diagram shows generation of brush-mark mask and brush-mark processing.

Fig. 9 is a diagram that shows a modification of original brush-mark mask.

Fig. 10 is a diagram that shows an example of brush-mark processing in the embodiment. The direction of a pen touch vector is changed in relation to a moving direction.

Fig. 11 is a flow chart that shows an algorithm of brush-mark processing in the embodiment.

Fig. 12 is a block diagram of an image processor of a modification.

Fig. 13 is a diagram that shows generation of a shape at the time of pressure increase in the modification.

Fig. 14 is a diagram that shows a rotation-detecting pen used in the modification.

Fig. 15 is a flow chart that shows a part of operation in the embodiment in which the rotation-detecting pen is used.

Fig 16 is a diagram that shows a pen in a modification in which strain is used to determine a pen touch vector.

Fig. 17 is a characteristic diagram showing that strain is used to determine a pen touch vector.

Fig. 18 is a flow chart that shows an algorithm for determining a pen touch vector in the modification in which strain is used.

Fig. 19 is a diagram showing a pen in a new modification in which strain is used.

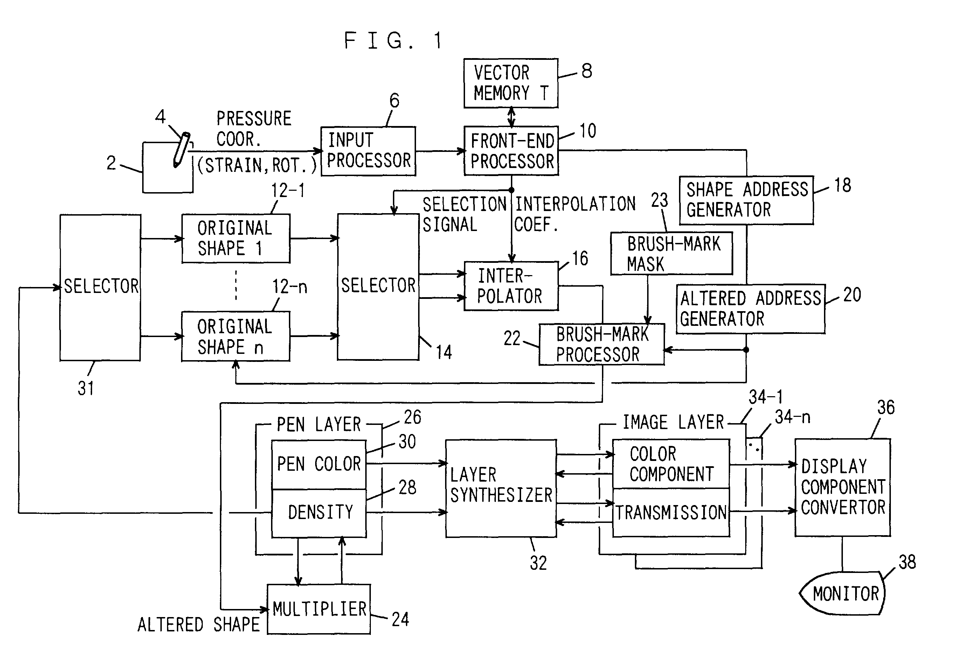

An embodiment and its modification are shown in Fig. 1 through Fig. 18. Fig. 1 shows an outline of an image processor of the embodiment. 2 denotes a digitizer and 4 denotes a pen comprising a stylus. Drawing pressure and coordinates from the pen 4 are put into an input processor 6, for example, at intervals of a specified time. The pen 4 may be designed to detect strain, rotation, etc. given to the stem, and these data may be put into the input processor 6. 8 denotes a vector memory that stores a pen touch vector T and vectors M1, M2, etc. indicating the moving directions of the pen 4. 10 denotes a front-end processor. In addition to these inputs, the kind, etc. of a drawing tool which the pen 4 simulates are specified from menu, etc.

For example, three kinds of original shape, which differ from each other in terms of drawing pressure, are stored for each of virtual drawing tool. Kinds of drawing tool to be simulated include writing brushes, paintbrushes, crayons, chalks and air sprayers. The original shapes for these tools are basically circular and their values indicate input image densities. n kinds of original shape are stored in original shape memories 12-1 through 12-n. 14 denotes a selector that selects, according to a kind of drawing tool to be used, two kinds (according to drawing pressure) of original shape out of n kinds of original shape to put them into an interpolator 16. The interpolator 16 interpolates between the two kinds of original shape , for example, according to drawing pressure, to generate an output. To modify the two original shapes according to a pen touch vector T before interpolation by the interpolator 16, shape addresses are generated by a shape address generator 18 and these shape addresses are converted by an altered address generator 20. 22 denotes a brush-mark processor. 23 denotes a brush-mark mask memory that stores brush-mark masks for brush-mark processing.

An altered shape, which has been given brush-mark processing as required, is put into a multiplier 24. Multiplication is given to the altered shape to make mixed interpolation with a density value that has been stored in a density memory 28 of a pen layer memory 26, and the result is written on the density memory 28. A color value of the pen that has been designated from menu, etc. is stored in a pen color memory 30 of the pen layer memory 26. In stead of modifying the original shape by the altered address generator 20 each time, for example, a density distribution stored in the density memory or an output of the interpolator 16 may be used as a shape, and this shape may be stored, via the selector 31, in any space of the original shape memories 12-1 through 12-n. In this case, preferably, shapes of two or three time points, of which pen touch vectors T have a common direction but of which pressures differ from each other, are stored, and they are interpolated and used as shapes at the respective pressures. In this way, address conversion by the altered address generator 20 can be avoided.

32 denotes a layer synthesizer that makes mixed interpolation of an inputted image stored in any one of image layers 34-1 through 34-n and image for a plurality of patches or for one stroke stored in the pen layer memory 26. The result is written on the original image layer. In the image layers 34-1 through 34-n, data of color components R, G, B, etc. of the images of the respective layers and data of transmissions of the respective layers are stored. In drawing an image of transmission, the transmission image may be considered as a black-and-white image. There is no need of storing color values in the pen color memory 30. Next, synthesis of image layers, offset correction, reduction, magnification, etc. are made by a display component converter 36, and the result is displayed on a monitor 38.

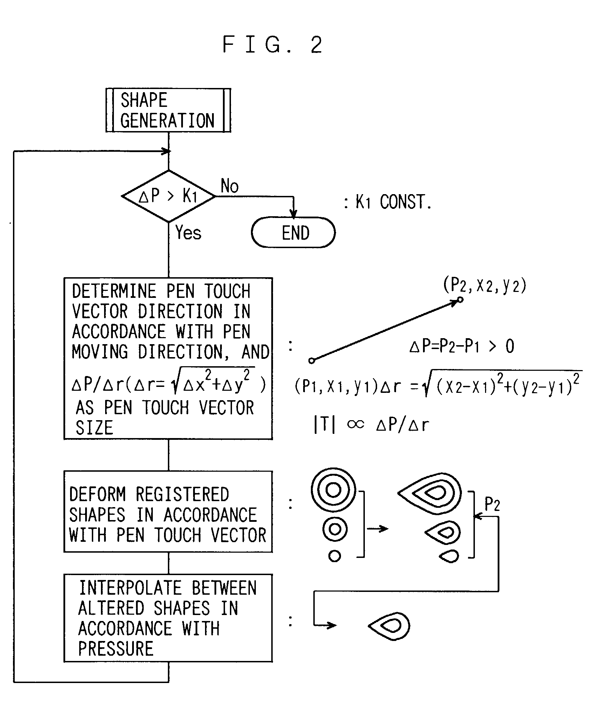

Fig. 2 through Fig. 4 show generation of a shape from original images. Generation of a shape starts from generation of a pen touch vector T. This starts when a drawing pressure P increases by more than a constant K1 while a pen 4 moves over a unit distance or in a unit time. Preferably, the generation process of a touch vector T starts up when an increment in drawing pressure per distance exceeds a threshold K1. Besides Euclidean distance, this distance may include the sum of absolute values of the differences of the x and y coordinates of a starting point and a terminal point of the pen 4, the greater one of the absolute values of the differences of the x and y coordinates thereof. Any thing that can be used as a distance will do. The direction of the pen touch vector T is the moving direction of the pen 4 while the drawing pressure P increases. The magnitude of the pen touch vector T is the gradient of the increase in drawing pressure. In place of directly using the increment in drawing pressure, an increment in logarithm of drawing pressure, an increment in square root of drawing pressure or the like may be used.

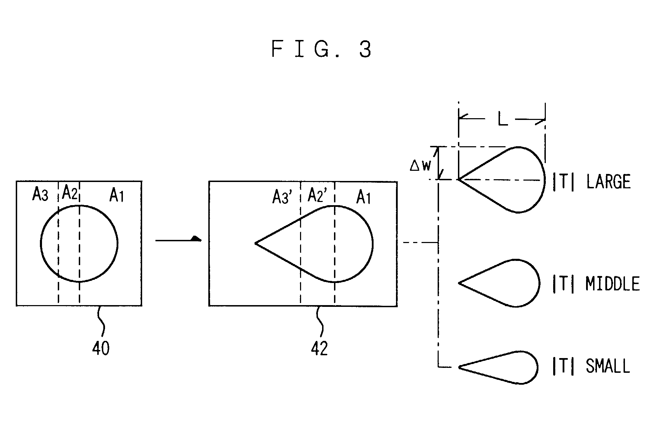

A pen touch vector T thus generated is stored in the vector memory 8, and original shapes stored in original shape memories 12-1 through 12-n are modified according to the pen touch vector T. This modification is illustrated in Fig. 3. A memory space storing an original shape 40 is divided into, for example, three kinds of area, A1 through A3. Then affine transformation, which scales in the longitudinal direction, is given to each area. As a result, a shape 42 of Fig. 3 is generated. Here, longitudinal axial symmetry of the shape 42 is used. Conversion from the original shape 40 to the shape 42 is not limited to affine transformation. For example, mesh mapping may be used. Or, as shown in the embodiment of Fig. 1, scan address for the area storing the original shape 40 may be converted to generate the shape 42 of Fig. 3.

In the right of Fig. 3, changes of the shape, when the direction of a touch vector T is constant but the magnitude thereof changes from a big one to a medium one, then to a small one, are shown. The big magnitude of the touch vector T corresponds to a case wherein a brush is made to contact a canvas, then the brush is pressed against the canvas quickly and strongly to deform the brush tip. The width of the shape increases sharply from the starting point (the left side of the diagram) towards the top end (the right side of the diagram) to generate a thick teardrop shape. On the other hand, when the magnitude of the touch vector T is small, the increase in drawing pressure after the brush has been made to touch the canvas is small and the brush tip is not slanted, and the increase in line width over this period is small. Moreover, the increase in the width Aw of the shape in relation to the length L of the shape gets smaller. Thus, the greater is the magnitude of the touch vector T, the greater is the increment in line width between the root end and the top end of the shape.

With reference to Fig. 2 again, for example, three original shapes, which are prepared according to the drawing pressure, are modified according to the respective touch vectors T. Two out of these three shapes are selected, and linear interpolation is made according to the drawing pressure P to generate a shape to be used.

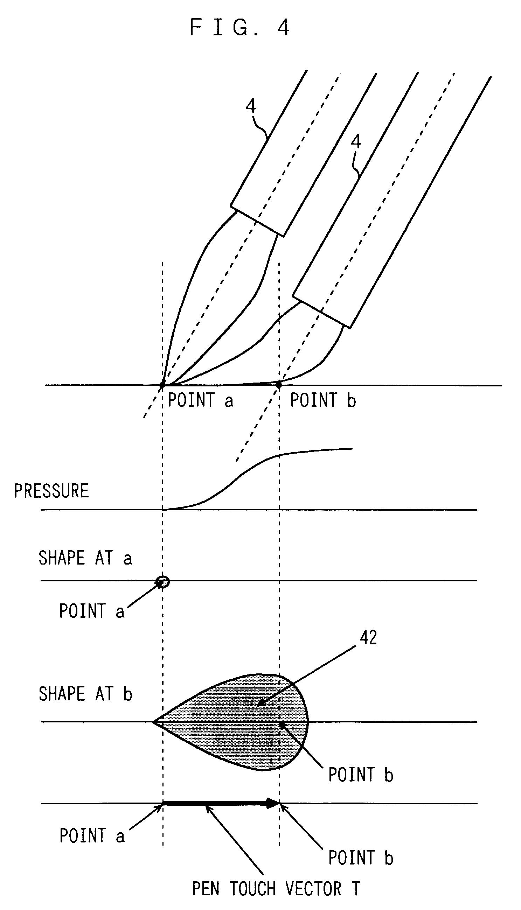

The shape generating mechanism is shown in Fig. 4. Suppose that the pen 4 contacts a virtual canvas comprising a digitizer 2 at a point a, and after that, the pen 4 is moved to a point b. During this time, the drawing pressure increases as shown in the middle of Fig. 4, At the point a, the pen 4 is immediately after the contact and the pen 4 has not moved yet. Hence the shape is substantially circular just like the original shape. At the point b, the pen 4 has moved from the point a to the point b, and during this time, the drawing pressure has increased, resulting in a teardrop shape 42. The direction of the pen touch vector T is from the point a to the point b, and the magnitude thereof is equal to the increment in drawing pressure between the point a and the point b divided by the distance between the point a and the point b.

When the pen 4 touches the digitizer 2 in the initial stage of a stroke, a pen touch vector T will be generated. When the drawing pressure increases in the middle of a stroke, a pen touch vector T will be generated. The old pen touch vector, which has been stored, and the newly generated pen touch vector are subjected, for example, linear interpolation to use the result as a new pen touch vector.

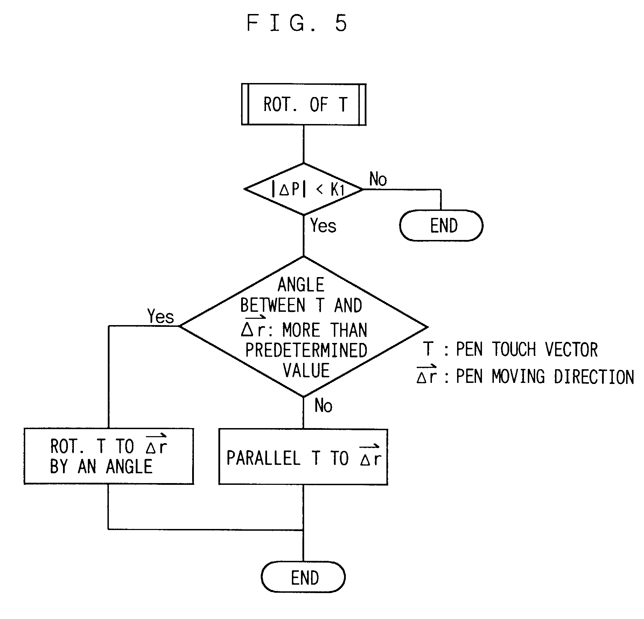

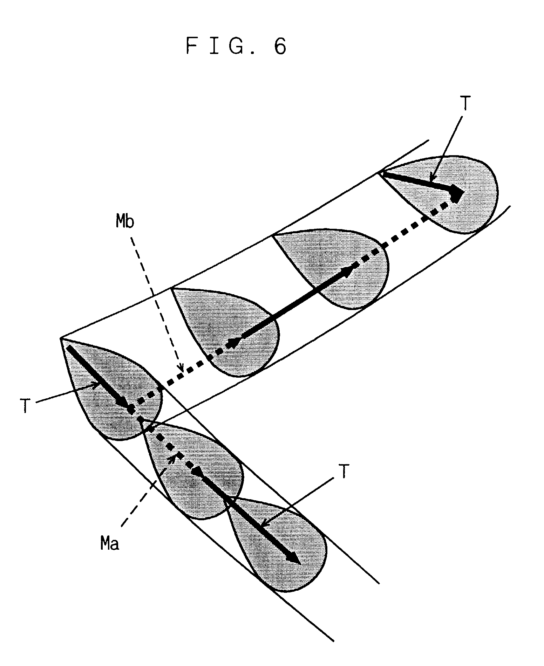

Fig. 5 and Fig. 6 show the processing when the pen 4 is translated at a constant drawing pressure. The shape in the left middle of Fig. 6 is the first shape, and it is assumed that a pen touch vector T has been generated at this point of time. The brush tip is directed to the left top of Fig. 6 at this point of time. Suppose the pen 4 is moved from here to the right bottom in a moving direction Ma. In this case, the line width is relatively narrow, the direction of the pen touch vector T does not change, and the shape remains constant. Suppose, in contrast with it, the pen 4 is moved from the left middle of Fig. 6 to the right top in a direction Mb. In this case, the direction of the pen touch vector T is basically constant, hence the direction of the shape is basically constant, and the line width is relatively large. However, in the embodiment, to reflect that the actual brush tip gradually turns towards the moving direction of the pen 4, the pen touch vector T is rotated gradually towards the moving direction Mb. With this, the configuration of the shape changes gradually and the line width decreases gradually.

This algorithm is shown in Fig. 5. After verifying that the change in drawing pressure is less than k1 and the process of generating a pen touch vector is not in action, the angle between the direction of the pen touch vector T and the moving direction of the pen 4 will be determined. Such an angle can be easily derived from computation of inner product, etc. If this angle is not greater than a predetermined value, the direction of the pen touch vector T will be paralleled to the moving direction of the pen. If the angle is greater than the predetermined value, a certain length of line will be drawn, then the pen touch vector T will be rotated to the moving direction gradually at a predetermined rate so that the direction of the pen touch vector T is parallel to the moving direction of the pen.

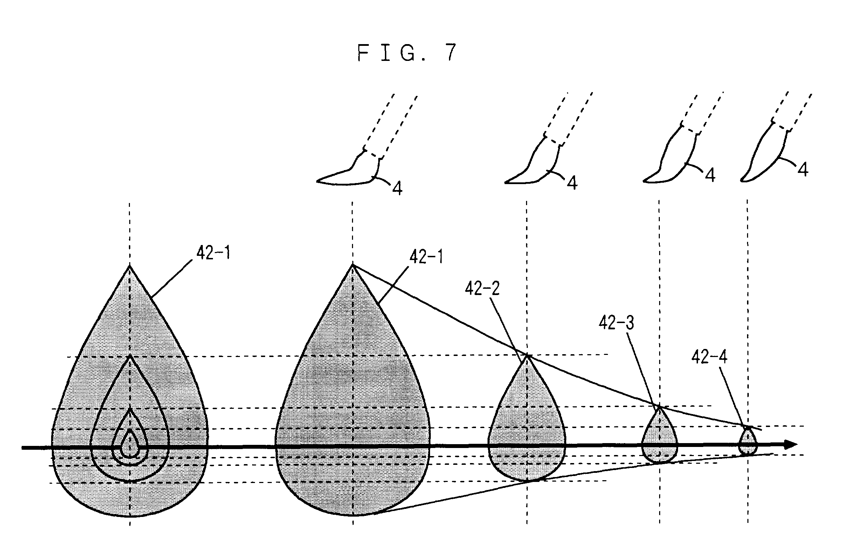

Fig. 7 shows the processing when the moving direction of the pen 4 is constant and the drawing pressure decreases. This corresponds to removing the pen 4 from the digitizer 2 gently, and this process does not generate brush-mark resulting from spring at the end of the stroke. In this case, the pen touch vector T is not changed, and the shape subjected to similar transformation according to drawing pressure. Here, linear movement of the pen 4 is understood as that the locus of the center line of the stem of the pen 4 is a straight line. However, it may be understood as that the locus of the pen brush tip is linear.

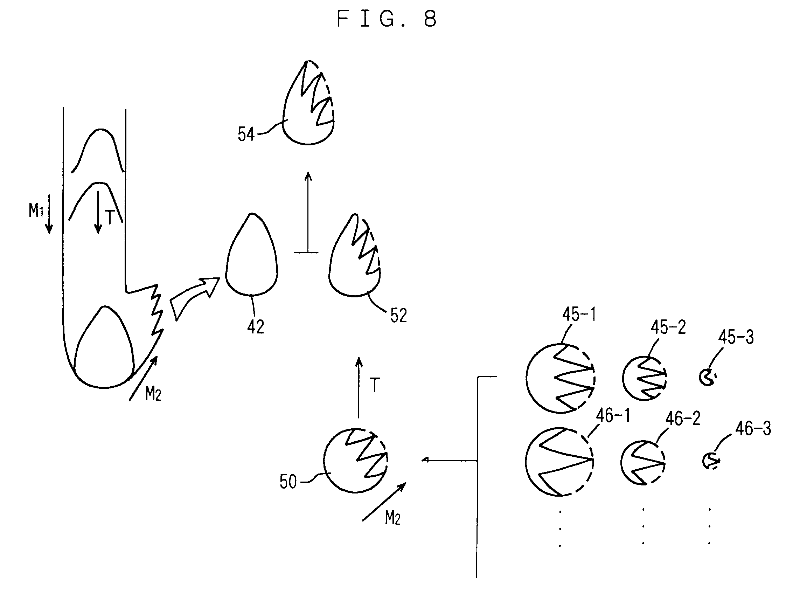

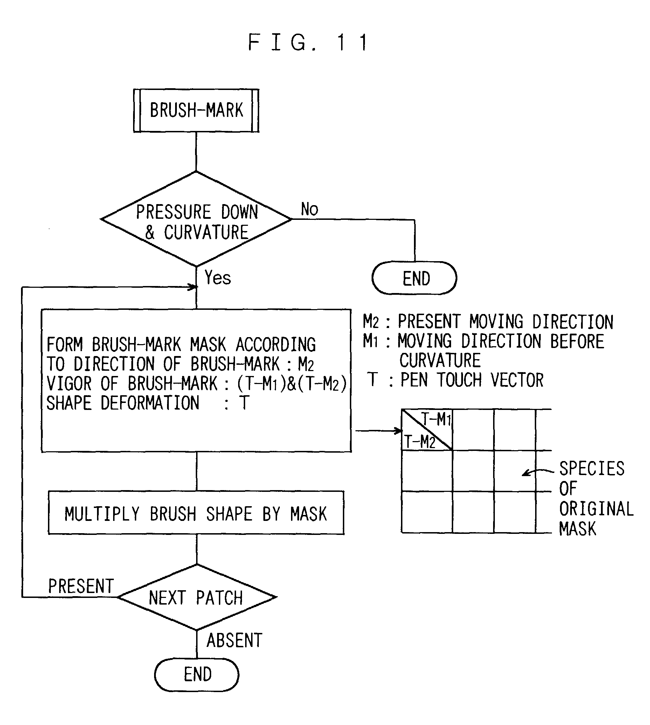

Fig. 8 through Fig. 11 show brush-mark processing. Its algorithm is shown in Fig. 11. When a drop in drawing pressure is greater than a predetermined value and there is a curvature in the moving direction of the pen 4, brush-mark processing will be started up. Here, T denotes a pen touch vector, M1 denotes the moving direction of the pen 4 before the curvature, and M2 denotes the present moving direction. The direction of brush-mark is parallel to the present moving direction M2 of the pen 4, and vigor of the brush-mark is determined by the pen touch vector T and the present moving direction M2 and the moving direction before curve M1. In the embodiment, a two-dimensional look-up table having two indices T-M1 and T-M2 is prepared. Vigor of the brush-mark is determined by this table to select one species of original mask for brush-mark processing. Then, the original mask for brush-mark processing is modified by the pen touch vector T to be used as the mask of the brush-mark portion. Next, the brush shape is multiplied by the mask of brush-mark portion to complete brush-mark processing.

For example, as shown in Fig. 8, suppose the old moving direction M1 and the pen touch vector T are parallel to each other and the pen 4 is sprung abruptly. In this case, the brush-mark is most conspicuous. 42 denotes the shape of the pen 4 in the brush-mark portion. The brush-mark mask 52 is generated as follows. The brush-mark mask memory 23 of Fig. 1 stores, for example, 9 original brush-mark masks 45-1 ~ 46-3 which vary in degree of brush-mark (vigor of brush-mark) and diameter from each other. By means of the look-up table shown in Fig. 11, the vigor of brush-mark is determined and the species of original brush-mark mask is selected. Next, according to the drawing pressure at the portion for brush-mark processing, two masks on both sides of the selected mask are read out. The two read-out masks are subjected to linear interpolation according to drawing pressure, and the interpolated mask is rotated to the moving direction M2 of the pen 4 in the brush-mark portion to generate an original brush-mark mask 50. Next, this mask 50 is modified by the pen touch vector T to generate the brush-mark mask 52. Then, the shape 42 is multiplied by the brush-mark mask 52; the density of the shape 42 is multiplied by the density value of the brush-mark mask 52 and the result is defined as the density value of each pixel, and a brush-mark shape 54 is produced. When the brush-mark shape 54 is used to draw the brush-mark processed portion, drawing shown in Fig. 8 can be made.

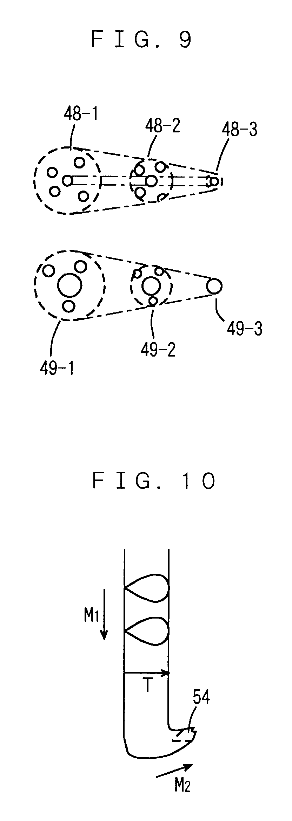

In Fig. 8, notched brush-mark masks 45-1 ~ 46-3 are used. However, as shown in Fig. 9, dotted brush-mark masks 48-1 ~ 49-3 may be used. In these brush-mark masks, an area indicated by dashed line is the effective masking area, and dots indicated by full line in the effective masking area are areas that pass the mask (drawing is made). For example, when the drawing pressure drops and the mask to be used is changed from one in the left of Fig. 9 to another in the right thereof, the dots in the center will remain to the end and form a continuous line. Other dots will disappear gradually and brush-mark will be expressed eventually. Hence masks such as brush-mark masks 48-1 ~ 49-3 may be used.

Fig. 10 shows processing when in a brush-mark portion the pen touch vector T and the moving direction M2 of the pen 4 are substantially parallel to each other. In this case, the moving direction M1 of the pen 4 is substantially perpendicular to the pen touch vector T, and the brush tip is regular in the brush-mark portion and the degree of brush-mark is low. In this case, as the angle between the pen touch vector T and the moving direction M2 in the brush-mark portion is small and the angle between the pen touch vector T and the moving direction M1 before brush-mark is large, a brush-mark of low degree of brush-mark is selected from the look-up table of Fig. 11. According to this selection, for example, three species of brush-mark mask are read out, and they are subjected to linear interpolation according to drawing pressure, then rotation to the moving direction M2 of the pen 4 is made. After that, modification according to the pen touch vector T and multiplication by the shape in the brush-mark portion completes the processing of Fig. 10.

Although a specific brush-mark process has been described above, it is sufficient if, in a portion for brush-mark processing, brush-mark drawing can be made in a direction substantially parallel to the moving direction of the pen 4. Its startup condition is that the moving direction of the pen 4 changes suddenly and the drawing pressure decreases.

### Generation of Shape

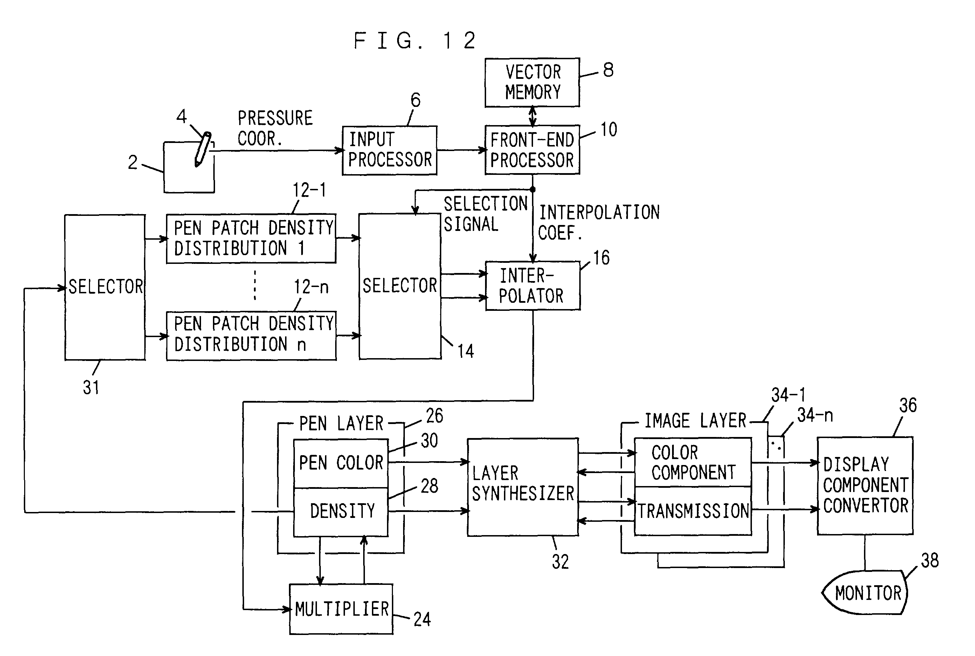

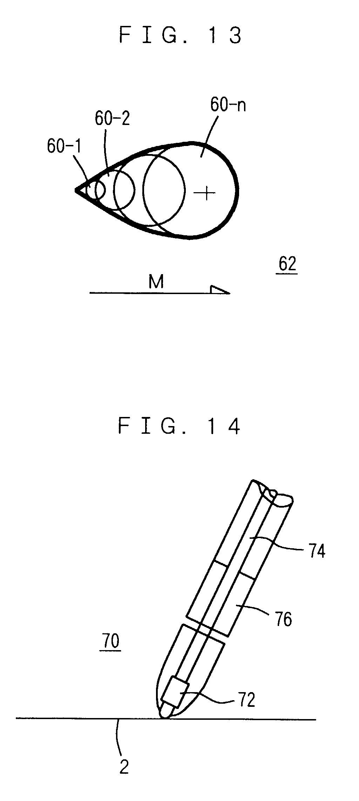

A modification regarding generation of a shape is shown in Fig. 12 and Fig. 13. As shown in Fig. 12, in this modification, the brush-mark processor 22, the shape address generator 18 and the altered address generator 20 are removed from the image processor of Fig. 1. When the drawing pressure increases, the diameter of each touch is increased according to the increase in drawing pressure to obtain a teardrop-shaped synthesized shape. This synthesized shape is stored in a density memory 28. If this synthesized shape is used in subsequent drawing through a selector 31, a shape can be generated without generating the shape every time and without making transformation such as affine transformation.

An example of generation of a shape is shown in Fig. 13. 60-1 ~ 60-n are original shapes. These original shapes are circular and their radii increase gradually according to increase in drawing pressure. At this time, the moving direction of the pen 4 is in the direction of an arrow M of Fig. 13, and this direction is the direction of the pen touch vector T. However, in this example, there is no need of storing the pen touch vector T. It is sufficient to store the synthesized shape 63 of Fig. 13.

### Rotation of the Pen

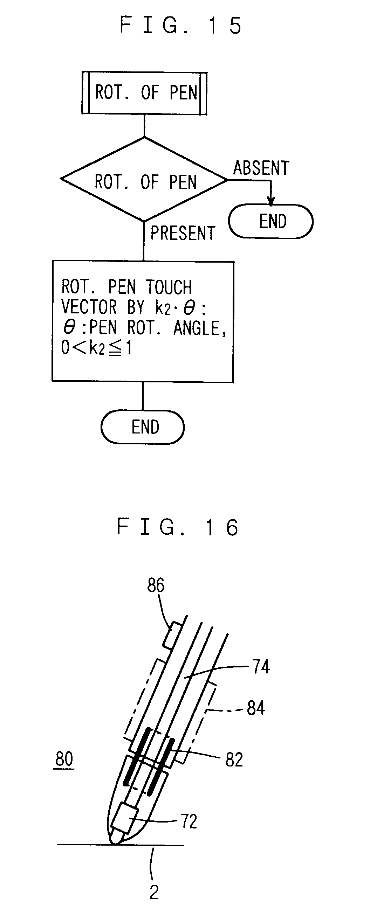

Fig. 14 and Fig. 15 show a modification in which rotation of a pen 70 is used to rotate the direction of a pen touch vector T. The structure of the pen 70 to be used is shown in Fig 14. 72 denotes a coordinate detector, 74 is a pressure detector, and 76 is a gyro sensor. Any sensor can be used as the gyro sensor provided that it can detect rotation of the stem of the pen 70.

Next, as shown in Fig. 15, if any rotation of the pen 70 exists, the direction of the pen touch vector T will be rotated by Kθ (K is positive and not greater than 1, and preferably K2 is positive and is less than 1). θ is the pen rotation angle. When this is done, the direction of the pen touch vector T will rotate to follow the rotation of the pen 70 and can simulate a manipulation of the pen, which rotates the pen in the middle of a stroke to rotate the direction of the brush tip.

### Detection of Strain

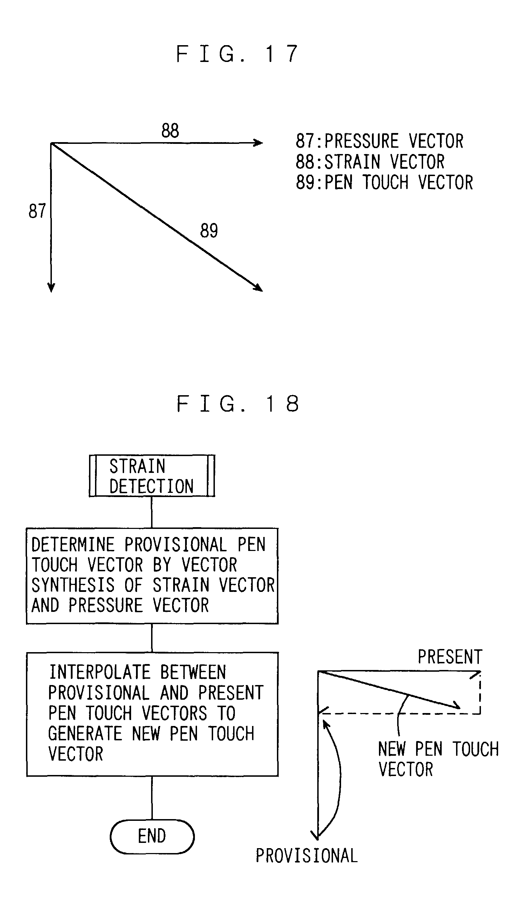

Fig. 16 through Fig. 18 show a modification in which the direction of a pen touch vector 89 is determined by detecting a strain that is exerted to a pen 80. In the embodiment of Fig. 1, the direction of the pen touch vector T can be determined only when the drawing pressure increases. After that, the direction of the pen touch vector T can be determined only in limited conditions, such as following a parallel displacement of the pen 4 and following the rotation of the pen. In contrast to it, in the present modification, the pen 80 is used, and for example, four strain gauges 82 are provided over the circumference of the pen 80. When forces are applied to the pen 80 in an attempt to manipulate the direction of the brush tip, uneven strains will be generated in the four strain gauges 82. The pen 80 is provided with a projector 86 or the like that indicates the direction of angle of zero around the pen stem, and the direction of the projector 86 in relation to the x-y direction of the digitizer 2 can be detected. Then, the direction of angle of zero around the pen stem in relation to the digitizer coordinate system can be derived from the direction of the projector 86, and in turn, the direction of the strain being exerted in this direction can be determined by the strain gauges 82. Unevenness of the strains exerted to these four strain gauges 82 and the direction of the projector 86 are used to define the strain vector 88 of Fig. 17. When the drawing pressure vector 87, which is assumed to be directed vertically downward, and the strain vector 88 are composed together, a pen touch vector 89 will be generated. This vector composition is not limited to simple composition of two vectors having their unchanged magnitudes. Further, in place of using the strain gauges 82 here, pressure sensors 84 may be provided around the pen 80 and unevenness of forces of gripping the pen may be used to determine the strain vector 88.

It is also possible to estimate the manipulating direction of the brush tip from the inclination of the pen 80. However, the degree of this inclination of the pen in drawing is a matter of personal habit and is not related to the manipulation of the brush tip. It, therefore, is desirable to determine the strain vector by using forces that are applied by a user in directions other than the pen stem direction, and preferably, forces that are applied by a user in directions perpendicular to the pen stem.

Fig. 18 shows the algorithm for determining the pen touch vector T by using detection of strains. As shown in Fig. 17, the strain vector and the pressure vector are vector-synthesized to determine a provisional pen touch vector. Next, the provisional pen touch vector and the present pen touch vector are interpolated to obtain a new pen touch vector. The ratio of contribution of the provisional pen touch vector and the present pen touch vector in determination of the new pen touch vector can be set suitably. It is desirable that the direction of the pen touch vector changes at a specified rate. For example, as shown in the right of Fig. 18, the provisional pen touch vector is multiplied by a constant being smaller than 1 to reduce its contribution. After that, it is vector-synthesized with the present pen touch vector, and to prevent the magnitude of the pen touch vector from diverging, the magnitude of the synthesized vector is reduced at a predetermined rate to determine a new pen touch vector.

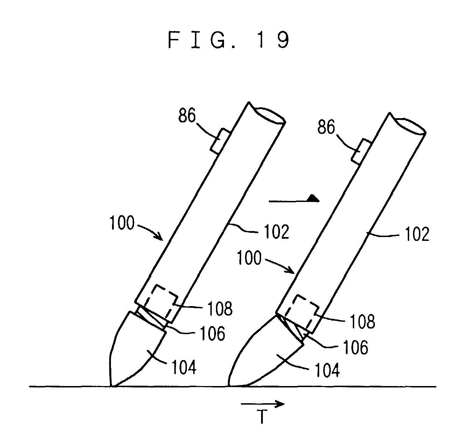

Fig. 19 shows a new pen 100 that is used to determine a pen touch vector by using strains. 102 denotes the pen stem, 104 a brush tip, 106 a flexible piece, and 108 a strain detector, respectively. The strain detector 108 measures strain distribution generated in the flexible piece 106. When the brush tip 104 of the pen 100 is tilted from the state shown in the left of Fig. 19 to the state shown in the right of Fig. 19, the flexible piece 106 will be flexed, and with this, a strain distribution will be generated in the strain detector 108. A strain distribution in a plane parallel to the top end face of the pen stem 102 indicates the degree of tilting of the brush tip 104, and a mean value of strains in the direction parallel to the pen stem indicates the drawing pressure. Then, with the technique of Fig. 17 and Fig. 18, the pen touch vector and the drawing pressure can be determined.

Thus it may be seen that, at least in its preferred form, the present invention provides an image processing method that realistically simulates a paintbrush or a writing brush and an apparatus therefor.

In particular, the present invention may provide an image processing method that can simulate the degree of bending a brush tip in relation to the brush stem and an apparatus therefor.

The present invention may provide a specific method of generating shapes which simulate a brush.

The present invention may provide a specific method of generating the above-mentioned shapes from original shapes, which are, for example, circular.

The present invention may provide a simple method of generating the above-mentioned shapes from original shapes.

The present invention may simulate a brush when drawing is made at a substantially constant drawing pressure after the brush has been made to contact a canvas, etc.

The present invention may simulate a brush more realistically in the above-mentioned case.

The present invention may simulate rotation of a brush.

The present invention may enable generation of a pen touch vector besides when the drawing pressure is increasing.

The present invention may provide an image processor which expresses the relationship of a tip of a brush with a stem thereof. The present invention may be employed to provide a specific mechanism of generating the above-mentioned shapes.

The present invention may be employed to simulate brush-mark realistically.

## Claims

1. An image processing method for drawing according to coordinates and drawing pressure given by a drawing input,
characterized by generating and storing a shape having a pointed root end and a top end thicker than the root end, having a direction determined by the moving direction of said drawing input, and having a degree of thickening from the root end to the top end determined by increase in said drawing pressure, based upon said increase in said drawing pressure, and
drawing with usage of the stored shape.

2. An image processing method of claim 1, wherein said shape is stored, by generating and storing a pen touch vector, having a direction determined by the moving direction of the drawing input and having a magnitude determined by the increase in the drawing pressure.

3. An image processing method of claim 2, generating said shape by modifying a stored original shape according to said pen touch vector.

4. An image processing method of claim 1, generating said shape by enlarging the size of an original shape with the increase in the drawing pressure into a plurality of enlarged shapes and overlapping said plurality of enlarged shapes.

5. An image processing method of claim 1, wherein drawing is performed with usage of said stored shape during said drawing pressure being substantially constant.

6. An image processing method of claim 5, wherein the direction of said shape is rotated to the moving direction of the drawing input during said drawing pressure being constant.

7. An image processing method of claim 1, wherein the direction of the stored shape is rotated by detecting rotation of said drawing input.

8. An image processing method for drawing according to coordinates given by a drawing input, having a stem and drawing pressure applied parallel to the stem,
characterized by generating a pen touch vector according to both a force applied in a direction not parallel to a direction of said stem and the drawing pressure of the drawing input,
generating a shape in the direction of said pen touch vector and having a pointed root end and a thick top end, and having a degree of thickening from the root end to the top end determined by the magnitude of the pen touch vector, and
drawing with usage of said shape.

9. An image processing apparatus for drawing according to coordinates and drawing pressure given by a movable drawing input, comprising means for generating and storing a shape having a pointed root end and a thick top end, having a direction determined by a moving direction of said drawing input, and having a degree of thickening from the root end to the top end determined by increase in said drawing pressure, and
means for drawing with usage of the stored shape.

10. An image processor of claim 9, further comprising
means for generating a pen touch vector having a direction determined by the moving direction of the drawing input, and having a magnitude determined by the increase in the drawing pressure,
means for storing said pen touch vector, and
means for modifying a stored original shape according to the pen touch vector for generating said shape.

11. An image processor of claim 9, further comprising means for detecting a change in the moving direction of the drawing input and a decrease in said drawing pressure and performing brush-mark drawing upon the detection of said change in the moving direction and the decrease in said drawing pressure.
